# FASCICULE DE BREVET EUROPEEN

(11) **EP 3 259 487 B1**
(45) Date de publication et mention de la délivrance du brevet: **18.10.2023**
(21) Numéro de dépôt: 16705153.1
(22) Date de dépôt: 17.02.2016
(51) Int. Cl.: F16D 69/04

(54) **DISQUE DE FRICTION COMPRENANT UNE GARNITURE DE FRICTION COLLEE A L'ETAT RETICULE**
REIBSCHEIBE MIT EINEM REIBBELAG, DER IM VERNETZTEN ZUSTAND VERKLEBT IST
FRICTION DISK COMPRISING A FRICTION LINING GLUED IN THE CROSS-LINKED STATE

(30) Priorité: 17.02.2015 FR 1551327
(43) Date de publication de la demande: 27.12.2017
(73) Titulaire: Valeo Matériaux de Friction, 87020 Limoges (FR)
(72) Inventeur: ALIX, Isabelle, 87020 Limoges (FR); PANTIER, Philippe, 87020 Limoges (FR); COURAUD, Dominique, 87020 Limoges (FR); SANCHEZ, Laurent, 87020 Limoges (FR)
(74) Mandataire: Valeo Powertrain Systems
(86) Numéro de dépôt international: PCT/EP2016/053392
(87) Numéro de publication internationale: WO 2016/131888

(56) Documents cités:
- FR-A1- 2 902 849
- US-A- 4 256 801
- US-A- 5 281 481

## Description

L'invention se rapporte à un disque de friction comprenant un disque support et une garniture de friction collée à l'état réticulé sur l'une des faces du disque support et un procédé de fixation par collage d'une garniture de friction à l'état réticulé sur une surface d'un disque support.

Les disques de friction selon l'invention sont notamment destinés à des véhicules automobiles, en particulier pour des embrayages à sec ou humides ou encore pour des disques et plaquettes de frein.

Il est connu, par exemple de EP0781937, des procédés de collage d'un matériau de friction sur un support en acier afin d'obtenir des disques de friction. Le procédé de collage décrit dans EP0781937 comprend le collage d'un matériau de friction sur un support en acier préalablement enduit de colle contenant un solvant. Le procédé de collage comprend l'application d'une pression à température donnée de sorte que le chauffage soit plus rapide côté support métallique enduit de colle, afin que la colle commence à durcir au contact du matériau de friction avant que celui-ci ne se dilate.

Le document US4256801 divulgue un procédé de collage d'une garniture de friction sur un disque support mais ne donne aucune caractéristique sur la colle pouvant être utilisée.

Les procédés de collage existant peuvent être améliorés, en particulier concernant la résistance de la liaison entre le matériau de friction et le support. Il est particulièrement avantageux d'augmenter la résistance de liaison entre le matériau de friction et le support aux contraintes de cisaillement.

Ainsi, l'un des buts de la présente invention est de fournir un disque de friction ayant une résistance aux contraintes de cisaillement radiales et/ou tangentielles améliorée.

L'invention propose ainsi un disque de friction comprenant un disque support et une garniture de friction collée à l'état réticulé sur l'une des faces du disque support,
la colle utilisée pour coller la garniture de friction sur l'une des faces du disque support est une colle en poudre sans solvant et comprenant :
   - une résine phénolique solide,
   - un taux massique d'agent fluidifiant supérieur ou égal à 0.1% et inférieur ou égal à 1 %, et
   - un taux massique de catalyseur inférieur à 7% et supérieur ou égal à 3%,
le collage de la garniture de friction à l'état réticulé sur ladite face du disque support résiste à une force centrifuge correspondant à une rotation de 15000 rpm à une température de 200°C.

De manière surprenante, les inventeurs se sont aperçus qu'un collage de la garniture de friction à l'état réticulé résistant à une force de centrifuge correspondant à une rotation de 15000 rpm à une température de 200°C permet également d'améliorer la résistance aux contraintes de cisaillement radiales et/ou tangentielles de la liaison entre la garniture de friction et le disque support.

La garniture de friction étant réticulée, elle ne flue pas lors du collage.

L'état réticulé confère à la garniture de friction une certaine porosité qui permet une meilleure interaction de la garniture et de la colle.

La garniture de friction peut comprendre une matrice comportant notamment des résines et des fils continues. La colle peut mouiller des fibres apparentes améliorant ainsi l'interaction de la garniture et de la colle pour favoriser l'adhésion sur le disque support. C'est notamment le coeur de fibres apparentes non imprégnées de résine qui peut être mouillé par la colle.

Les fils continus peuvent présenter des cavités s'étendant selon la direction d'extension du fil et mesurant en largueur entre 1 mm et 10 mm, notamment 5 mm de large et ces cavités peuvent être mouillées par la colle.

La colle peut être absorbée par capillarité par les fils continus.

Le disque de friction selon l'invention peut également comprendre une ou plusieurs des caractéristiques ci-dessous, considérées individuellement ou selon toutes les combinaisons techniquement possibles :
- le collage de la garniture de friction sur ladite face du disque support résiste à une force centrifuge correspondant à une rotation de 15000 rpm à une température de 200°C après avoir subi un traitement thermique à une température supérieure ou égale à 350°C et inférieure ou égale à 400°C ; et/ou
- le disque de friction présent après arrachement de la matière de friction, des fibres continues arrachées et/ou de la matière arrachée d'épaisseur de 200µm à 1mm; la surface de ces zones de matière arrachée représente 40% à 100% de la surface du disque support, l'arrachement comprend une flexion sur le disque de friction entre 15° et 90° pour rompre la jonction entre la garniture de friction et le disque support et le retrait de l'ensemble de la garniture de friction (14) décollée; et/ou
- chaque zone de rupture adhésive a une surface de dimension inférieure à 1 cm², l'arrachement comprend une flexion sur le disque de friction entre 15° et 90° pour rompre la jonction entre la garniture de friction et le disque support et le retrait de l'ensemble de la garniture de friction (14) décollée.

Tout ou partie des caractéristiques qui viennent d'être mentionnées peuvent permettre d'améliorer encore la résistance aux contraintes de cisaillement radiales et/ou tangentielles de la liaison entre la garniture de friction et le disque support.

Les zones de rupture cohésive correspondent aux surfaces du disque support après arrachement qui présentent de la garniture de friction résiduelle.

Les zones de rupture adhésive correspondent aux surfaces qui ne présentent pas de matière résiduelle de friction et traduisant une rupture adhésive. Au sens de l'invention, on peut considérer qu'une zone ne présente pas de matière résiduelle lorsque la matière résiduelle avec des fils continus a une épaisseur inférieure à 80µm.

L'invention se rapporte en outre à un procédé de fixation par collage d'une garniture de friction sur une surface d'un disque support d'après la revendication 5.

Avantageusement, le procédé de fixation selon l'invention permet d'obtenir un disque de friction avec une liaison entre le matériau de friction et le disque support ayant une grande résistance aux contraintes de cisaillement et à la force de centrifugation.

Le procédé de fixation selon l'invention peut également comprendre une ou plusieurs des caractéristiques ci-dessous, considérées individuellement ou selon toutes les combinaisons techniquement possibles :
- on étale la colle en poudre sur la surface du disque support avec un grammage surfacique inférieur ou égal à 13 mg/cm² ; et/ou
- on étale la colle en poudre sur la surface de la garniture de friction à l'état réticulé avec un grammage surfacique inférieur ou égal à 13 mg/cm²
- la colle en poudre comprend un taux massique de catalyseur inférieur à 7% et supérieur ou égal à 3 % ; et/ou
- la colle en poudre sans solvant présente un écoulement supérieur ou égal à 50 mm, de préférence supérieur ou égal à 90 mm.

Une étape d'usinage de la garniture de friction peut être prévue préalablement à la mise en place de celle-ci sur la surface encollée du disque support.

La face de la garniture de friction usinée peut être la face en regard de la surface encollée du disque support. Un tel usinage permet de faire apparaitre les fils continus ce qui améliore l'absorption par capillarité de la colle par les fils continus maintenant apparents.

Cette étape d'usinage permet également d'éliminer une éventuelle couche de poussière préalablement formée qui nuirait au collage de la garniture sur le disque support. Une telle couche de poussière formerait une couche fragile susceptible de se détacher d'une partie saine de la garniture et risquerait de fragiliser le collage.

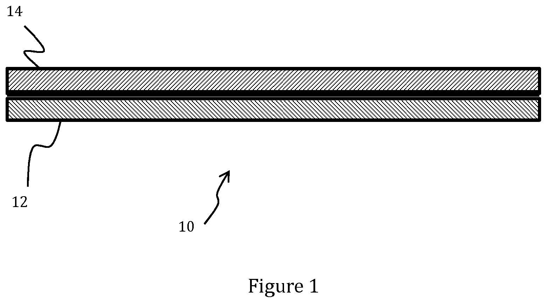

L'invention sera mieux comprise à la lumière de la description suivante qui n'est donnée qu'à titre indicatif et qui n'a pas pour but de limiter ladite invention, accompagnée de la figure 1 illustrant un disque de friction selon l'invention.

Un disque support est fourni au cours de l'étape de fourniture d'un disque support. Le disque support est par exemple en acier, d'une épaisseur supérieure ou égale à 0,3 mm et inférieure ou égale à 1 mm et d'un diamètre extérieur supérieur ou égal à 100 mm, de préférence supérieur ou égal à 200 mm et inférieur ou égal à 500 mm, de préférence inférieur ou égal à 280 mm. Le diamètre extérieur du disque support est par exemple compris entre 200 mm et 280 mm ou entre 380 mm et 500 mm.

De préférence, le disque support subit un traitement de surface préalable à l'étape de collage. L'étape de traitement de surface permet d'une part de dégraisser la surface, en particulier d'éliminer des traces d'huile de coupe pouvant être présentes suite à l'opération d'emboutissage, et d'autre part de préparer la surface pour favoriser l'adhésion avec la colle et la garniture de friction.

Le traitement de surface préalable peut comprendre :
- un décapage chimique de la surface du disque support sur laquelle la garniture de friction est destinée à être collée, le décapage comprenant un lessivage, une attaque à l'acide sulfurique et une passivation à l'acide orthophosphorique H3PO4, ou
- un traitement surtec^{®} de la surface du disque support sur laquelle la garniture de friction est destinée à être collée, le traitement surtec^{®} comprenant: un lessivage, i.e. une attaque chimique de la surface avec un agent commercial comme SURTEC412^{®} et un traitement avec un additif évitant la corrosion comme SURTEC533^{®}, ou
- une attaque mécanique de la surface du disque support sur laquelle la garniture de friction est destinée à être collée, par exemple par abrasion avec des particules d'oxyde de fer fine.

Au cours de l'étape de fourniture d'une garniture de friction à l'état réticulé, une garniture de friction thermo durci d'une épaisseur supérieure à 2 mm et inférieure à 5 mm est fournie. La garniture de friction a une forme de disque d'un diamètre extérieur supérieur ou égal à 100 mm, de préférence supérieur ou égal à 200 mm et inférieur ou égal à 500 mm, de préférence inférieur ou égal à 280 mm. Le diamètre extérieur du disque support est par exemple compris entre 200 mm et 280 mm ou entre 380 mm et 500 mm.

La garniture de friction peut être réalisée, par exemple usinée, de sorte à ce que les deux faces de la garniture soient sensiblement parallèles, i.e. différence d'épaisseur inférieure à 0,1 mm.

Au cours de l'étape de collage, la garniture de friction à l'état réticulé est collée sur une des surfaces du disque support.

La colle utilisée dans le procédé selon l'invention est une colle en poudre sans solvant.

Avantageusement, l'utilisation d'une colle en poudre sans solvant permet d'éviter les problèmes environnementaux liés aux solvants des colles solvantées. Il permet en outre d'éviter les problématiques de parfaite maîtrise de l'étape de séchage nécessaire dans le cas de colles solvantées pouvant initier la polymérisation de la colle ou laisser des traces de solvants générant la formation de poches de gaz lors du collage.

La colle en poudre sans solvant utilisée dans le procédé selon l'invention est une résine solide, par exemple de base phénolique novolac et/ou novolac résol, fonctionnalisée ou non chimiquement, et comprenant un catalyseur, par exemple de l'hexaméthylènetétramine (HMTA).

Dans le cadre de l'invention, les inventeurs ont constaté qu'un taux massique de catalyseur inférieur à 7% et supérieur à 3 % est particulièrement avantageux.

En effet, un taux massique de catalyseur inférieur à 7% permet de contrôler la quantité d'ammoniac gazeux libéré pendant la réticulation de la résine sous l'effet dudit catalyseur. L'ammoniac pouvant dégrader la surface de l'acier décapé chimiquement à l'acide, il est préférable de limiter la quantité d'ammoniac gazeux libéré pendant la réticulation de la résine.

De préférence, la colle en poudre selon l'invention se présente sous forme poudreuse de diamètre médian inférieur à 50µm, de préférence entre 10 et 30µm. Contrairement aux colles usuelles liquides avec un solvant organique ou aqueux, ces résines ont l'avantage d'être déposées sur les substrats sans générer de dégagement de composés organiques volatiles (COV) pouvant être nocifs à l'environnement.

Les inventeurs se sont aperçus que pour améliorer la répartition d'une colle en poudre sur la surface du disque support, il peut être préférable d'adapter son comportement rhéologique.

Un agent fluidifiant est ainsi ajouté. L'agent fluidifiant peut-être un agent fluidifiant minéral ajouté à la colle en poudre micronisée (<10µm), soit une silice précipitée, soit un oxyde d'aluminium. Le taux massique en agent fluidifiant est supérieur ou égal à 0,1% et inférieur ou égal à 1%, par exemple autour de 0,3%.

De plus, pour permettre une bonne adhésion initiale entre le film de colle et le disque support, l'étalement de la colle sur la surface du disque et la mouillabilité de la surface sont des paramètres à optimiser. Les inventeurs ont constaté qu'une colle en poudre ayant un écoulement supérieur ou égal à 50 mm, de préférence supérieur ou égal à 90 mm était particulièrement avantageux.

L'écoulement de la colle en poudre peut être mesuré au moyen du test suivant :
- on réalise une pastille de poudre de 1cm² de section comprenant entre 0,5 et 0,7g de résine,
- on dépose la pastille au centre d'une plaque en acier de 8cm × 14cm,
- on introduit la plaque en acier dans une étuve à 150°C.
- on positionne la plaque à l'horizontal pendant 3 minutes puis on l'incline à - 65° par rapport à la position de la pastille pendant 5s,
- on mesure la longueur de l'écoulement de la pastille sur la plaque en acier après avoir repositionné la plaque en acier à l'horizontal.

La colle en poudre peut être déposée sur la surface du disque support et/ou sur une surface de la garniture de friction à l'état réticulé par exemple par un procédé de poudrage électrostatique. En particulier, on charge les particules de la colle en poudre pour augmenter l'efficacité de l'adhésion à la surface du disque support métallique. La charge statique peut être produite par décharge électrique d'une électrode, i.e. effet «corona», ou par friction, i.e. effet triboélectrique.

Selon un mode de réalisation préféré de l'invention, la colle en poudre est déposée sur la surface du disque support avec un grammage surfacique inférieur ou égal à 13mg/cm², de préférence un grammage surfacique supérieur ou égal à 2mg/cm² et inférieur ou égal à 5mg/cm².

Le dépôt de la colle en poudre sur la surface du disque support est effectué de préférence à l'intérieur d'une cabine de pulvérisation ou d'une chambre de pulvérisation afin de contrôler les émissions de poussières dans l'air. Un système de ventilation récupère les poudres qui n'ont pas adhérées aux pièces. Ces poudres sont filtrées et l'air du système est re-circulées.

Suite au dépôt de la colle en poudre, cette dernière est fusionnée dans des conditions thermiques maitrisées, par exemple par convection d'air chaud et/ou par rayonnements infra-rouges. L'étape de fusion est maitrisée afin de permettre l'étalement de la colle en poudre sur la surface métallique du disque support sans pour autant initier le processus de réticulation de la colle. En effet, la colle doit adhérer sur la surface métallique du disque support tout en restant réactive pour l'étape d'assemblage avec le matériau de friction.

Suite à l'étape de fusion, le disque support avec au moins de ses surfaces encollée, peut être stocké.

Pour réaliser le collage de la garniture de friction sur le disque support, on met en contact la garniture de friction à l'état réticulé avec la surface encollée du disque support.

L'ensemble est chauffé à une température supérieure ou égale à 150 °C et inférieure ou égale à 190 °C pendant une durée supérieure ou égale à 5 min et inférieure ou égale à 2h sous une pression supérieure ou égale à 50 bars et inférieure ou égale à 150 bars.

Au cours de cette étape de cuisson la colle en poudre réagit, par polymérisation, permettant ainsi d'obtenir une liaison entre la garniture de friction et le disque support.

Afin de finaliser la réticulation de la colle, il est possible de prévoir suite à l'étape de cuisson une étape post cuisson au cours de laquelle on chauffe le disque de friction à une température supérieure ou égale à 200 °C et inférieure ou égale à 260 °C pendant une durée supérieure ou égale à 1h et inférieure ou égale à 15h à pression atmosphérique.

Le procédé de collage selon l'invention permet d'obtenir un disque 10 comme illustré de façon schématique et non à l'échelle sur la figure 1. Le disque de friction 10 comprend un disque support 12 et une garniture de friction 14 collée sur le disque support.

La garniture de friction est collée à l'état réticulé sur l'une des faces du disque support.

Comme indiqué précédemment, la garniture de friction est composée d'une couche de 2 à 5 mm d'un matériau de friction à l'état réticulé. Le disque support 12 est typiquement en acier et d'une épaisseur comprise entre 0,3 et 1 mm. Un disque de friction selon l'invention a un diamètre extérieur compris entre 200 mm et 280 mm.

La liaison entre la garniture de friction et le disque support est réalisé dans l'exemple décrit au moyen d'une colle thermo-durcie à longues chaines linéaires, permettant d'avoir un long écoulement et une meilleure mouillabilité des surfaces en contact avant réticulation de la colle,

Avantageusement, la liaison entre la garniture de friction et le disque support pour un disque de friction selon l'invention est de type cohésif.

Selon un premier aspect de l'invention, le collage de la garniture de friction à l'état réticulé sur une des faces du disque support résiste à une force centrifuge correspondant à une rotation de 15000 rpm à une température de 200°C.

Pour déterminer la résistance à la centrifugation du collage de la garniture de friction à l'état réticulé sur une des faces du disque support, il est proposé le procédé selon le test suivant :
- on conditionne le disque de friction en température à environ 200°C et on met le disque en rotation autour de son axe à environ 500 rpm,
- on augmente la vitesse de rotation du disque autour de son axe d'environ 200 rpm toutes les secondes jusqu'à rupture de la liaison entre la garniture de friction et le disque support en maintenant le disque de friction à une température d'environ 200°C.

Le disque de friction peut avoir préalablement à l'étape de conditionnement à 200°C avoir subi un abus thermique entre 350°C et 400°C.

Selon un deuxième aspect de l'invention, le collage de la garniture de friction à l'état réticulé sur une des faces du disque support résiste aux contraintes de cisaillement à l'interface lorsque le disque de friction est soumis à des températures supérieures à 300°C.

Selon un mode de réalisation, le disque de friction selon l'invention présente après arrachement de la matière de friction, des fibres continues arrachées et ou de la matière arrachée d'épaisseur de 200µm à 1mm; la surface de ces zones de matière arrachée d'épaisseur comprise entre 200µm et 1 mm représente 40% à 100% de la surface de l'acier.

Pour caractériser le caractère cohésif de la liaison entre le matériau de friction et le disque support, un test d'arrachement est pratiqué.

Le test d'arrachement comprend une flexion sur le disque de friction entre 15° et 90° pour rompre la jonction entre la garniture de friction et le disque support et le retrait de l'ensemble de la garniture de friction décollée.

Pour quantifier les surfaces de rupture adhésives, la surface du disque support est recouverte avec un papier ayant un grammage calibré, i.e. poids par unité de surface fixe, par exemple un grammage de 0,008 g/cm².

Les zones qui présentent une rupture adhésive sont reproduites sur le papier de grammage calibré. Le transfert sur le papier permet de mesurer la masse équivalente à cette surface, notée m_{rupture adhésive}, sur une balance de précision, par exemple à 0,0001g près.

La surface totale de la pièce est reproduite sur le même papier de grammage calibré, la masse équivalente mesurée est noté m_{surface totale}.

Le critère mesuré est le rapport entre (m_{rupture adhésive}/m_{surface totale})×100.

Pour les disques de friction selon l'invention, la surface de rupture cohésive avec un arrachement de matière compris entre 200 µm et 1 mm représentent 40% à 100% de la surface de l'acier. Ainsi, l'interface entre la garniture de friction et le disque support est plus résistante que le coeur de la garniture de friction.

De manière préférentielle, chaque zone de rupture adhésive a des surfaces de dimension inférieure à 1 cm².

L'invention a été décrite ci-dessus avec l'aide de modes de réalisation présentés sur la figure, sans limitation du concept inventif général.

Bien d'autres modifications et variations se suggèrent d'elles même à l'homme du métier, après réflexion sur les différents modes de réalisation illustrés dans cette demande. Ces modes de réalisation sont donnés à titre d'exemple et ne sont pas destinés à limiter la portée de l'invention, qui est déterminée exclusivement par les revendications ci-dessous.

Dans les revendications, le mot « comprenant » n'exclut pas d'autres éléments ou étapes, et l'utilisation de l'article indéfini « un » ou « une » n'exclut pas une pluralité. Le simple fait que différentes caractéristiques sont énumérées en revendications mutuellement dépendantes n'indique pas qu'une combinaison de ces caractéristiques ne puisse être avantageusement utilisée.

## Revendications

1. Disque de friction (10) comprenant un disque support (12) et une garniture de friction (14) collée à l'état réticulé sur l'une des faces du disque support, **caractérisé en ce que** la colle utilisée pour coller la garniture de friction sur l'une des faces du disque support est une colle en poudre sans solvant et comprenant :
- une résine phénolique solide,
- un taux massique d'agent fluidifiant supérieur ou égal à 0.1% et inférieur ou égal à 1 %, et
- un taux massique de catalyseur inférieur à 7% et supérieur ou égal à 3%,
le collage de la garniture de friction à l'état réticulé sur ladite face du disque support résistant à une force centrifuge correspondant à une rotation de 15000 rpm à une température de 200°C.

2. Disque de friction selon la revendication 1, dans lequel le collage de la garniture de friction sur ladite face du disque support résiste à une force centrifuge correspondant à une rotation de 15000 rpm à une température de 200°C après avoir subi un traitement thermique à une température supérieure ou égale à 350°C et inférieure ou égale à 400°C.

3. Disque de friction selon l'une des revendications 1 ou 2, présentant après arrachement de la matière de friction, des fibres continues arrachées et/ou de la matière arrachée d'épaisseur de 200µm à 1mm; la surface de ces zones de matière arrachée représente 40% à 100% de la surface du disque support, l'arrachement comprenant une flexion sur le disque de friction entre 15° et 90° pour rompre la jonction entre la garniture de friction (14) et le disque support (12) et le retrait de l'ensemble de la garniture de friction (14) décollée.

4. Disque de friction selon l'une quelconque des revendications précédentes, dans lequel après arrachement, chaque zone de rupture adhésive a une surface de dimension inférieure à 1 cm², l'arrachement comprenant une flexion sur le disque de friction entre 15° et 90° pour rompre la jonction entre la garniture de friction (14) et le disque support (12) et le retrait de l'ensemble de la garniture de friction (14) décollée.

5. Procédé de fixation par collage d'une garniture de friction sur une surface d'un disque support, dans lequel
- on dépose de la colle en poudre sans solvant à base de résine solide phénolique sur l'une au moins de la surface du disque support et d'une surface de la garniture de friction à l'état réticulé,
- on étale la colle sur cette surface par chauffage à une température inférieure à la température de réticulation de la résine,
- on met en contact la garniture de friction à l'état réticulé avec le disque support via ladite surface encollée,
- on chauffe l'ensemble à une température supérieure ou égale à 150 °C et inférieure ou égale à 190 °C pendant une durée supérieure ou égale à 5 min et inférieure ou égale à 2h sous une pression supérieure ou égale à 50 bars et inférieure ou égale à 150 bars,
- on chauffe l'ensemble à une température supérieure ou égale à 200 °C et inférieure ou égale à 260 °C pendant une durée supérieure ou égale à 1h et inférieure ou égale à 15h à pression atmosphérique.

6. Procédé selon la revendication 5, dans lequel on étale la colle en poudre sur la surface du disque support ou sur la surface de la garniture de friction à l'état réticulé avec un grammage surfacique inférieur ou égal à 13 mg/cm².

7. Procédé selon l'une des revendications 5 à 6, dans lequel la colle en poudre comprend un taux massique de catalyseur inférieur à 7% et supérieur ou égal à 3 %.

8. Procédé selon l'une des revendications 5 à 7, dans lequel la colle en poudre sans solvant présente un écoulement supérieur ou égal à 50 mm.

9. Procédé selon l'une des revendications 5 à 8, dans lequel une étape d'usinage de la garniture de friction est prévue préalablement à la mise en place de celle-ci sur la surface encollée du disque support.

## Patentansprüche

1. Reibscheibe (10), umfassend eine Trägerscheibe (12) und einen Reibbelag (14), der im vernetzten Zustand auf eine der Seiten der Trägerscheibe geklebt ist, **dadurch gekennzeichnet, dass** der zum Kleben des Reibbelags auf eine der Seiten der Trägerscheibe verwendete Klebstoff ein lösungsmittelfreier pulverförmiger Klebstoff ist und umfassend:
- ein festes Phenolharz,
- einen Massenanteil eines Verflüssigungsmittels von mehr als oder gleich 0,1 % und weniger als oder gleich 1 % und
- einen Massenanteil eines Katalysator von weniger als 7 % und mehr als oder gleich 3 %, wobei die Klebung des Reibbelags im vernetzten Zustand auf der Seite der Trägerscheibe einer Fliehkraft, die einer Rotation mit 15000 U/min entspricht, bei einer Temperatur von 200 °C standhält.

2. Reibscheibe nach Anspruch 1, bei der die Klebung des Reibbelags auf der Seite der Trägerscheibe einer Fliehkraft, die einer Rotation mit 15000 U/min entspricht, bei einer Temperatur von 200 °C standhält, nachdem sie einer Wärmebehandlung bei einer Temperatur von mehr als oder gleich 350 °C und weniger als oder gleich 400 °C unterzogen wurde.

3. Reibscheibe nach einem der Ansprüche 1 oder 2, nach dem Abreißen des Reibmaterials abgerissene endlose Fasern und/oder abgerissenes Material mit einer Dicke von 200 µm bis 1 mm aufweisend; wobei die Fläche dieser Bereiche von abgerissenem Material 40 % bis 100 % der Fläche der Trägerscheibe ausmacht,
wobei das Abreißen eine Flexion auf der Reibscheibe zwischen 15° und 90°, um die Verbindung zwischen dem Reibbelag (14) und der Trägerscheibe (12) zu brechen, und das Entfernen des gesamten abgelösten Reibbelags (14) umfasst.

4. Reibscheibe nach einem der vorhergehenden Ansprüche, bei der nach dem Abreißen jeder Adhäsionsbruchbereich eine Fläche mit einer Größe von weniger als 1 cm² hat, wobei das Abreißen eine Flexion auf der Reibscheibe zwischen 15° und 90°, um die Verbindung zwischen dem Reibbelag (14) und der Trägerscheibe (12) zu brechen, und das Entfernen des gesamten abgelösten Reibbelags (14) umfasst.

5. Verfahren zur Befestigung eines Reibbelags durch Kleben auf einer Fläche einer Trägerscheibe, bei dem
- lösungsmittelfreier pulverförmiger Klebstoff auf Basis eines festen Phenolharzes auf mindestens eine der Fläche der Trägerscheibe und einer Fläche des Reibbelags im vernetzten Zustand aufgetragen wird,
- der Klebstoff durch Erhitzen auf eine Temperatur unter der Vernetzungstemperatur des Harzes auf dieser Fläche ausgebreitet wird,
- der Reibbelag im vernetzten Zustand mit der Trägerscheibe über die mit Klebstoff versehene Fläche in Kontakt gebracht wird,
- die Anordnung auf eine Temperatur von mehr als oder gleich 150 °C und weniger als oder gleich 190 °C während einer Dauer von mehr als oder gleich 5 min und weniger als oder gleich 2 h unter einem Druck von mehr als oder gleich 50 bar und weniger als oder gleich 150 bar erhitzt wird,
- die Anordnung auf eine Temperatur von mehr als oder gleich 200 °C und weniger als oder gleich 260 °C während einer Dauer von mehr als oder gleich 1 h und weniger als oder gleich 15 h bei atmosphärischem Druck erhitzt wird.

6. Verfahren nach Anspruch 5, bei dem der pulverförmige Klebstoff auf der Fläche der Trägerscheibe oder auf der Fläche des Reibbelags im vernetzten Zustand mit einem Flächengewicht von weniger als oder gleich 13 mg/cm² ausgebreitet wird.

7. Verfahren nach einem der Ansprüche 5 bis 6, bei dem der pulverförmige Klebstoff einen Massenanteil eines Katalysators von weniger als 7 % und mehr als oder gleich 3 % umfasst.

8. Verfahren nach einem der Ansprüche 5 bis 7, bei dem der lösungsmittelfreie pulverförmige Klebstoff ein Verlaufen von mehr als oder gleich 50 mm aufweist.

9. Verfahren nach einem der Ansprüche 5 bis 8, bei dem ein Schritt des Bearbeitens des Reibbelags vor seinem Auflegen auf die mit Klebstoff versehene Fläche der Trägerscheibe vorgesehen ist.

## Claims

1. Friction disc (10) comprising a backing disc (12) and a friction lining (14) glued in the cross-linked state to one of the faces of the backing disc, **characterized in that** the glue used for gluing the friction lining to one of the faces of the backing disc is a solvent-free powdered glue containing:
- a solid phenolic resin,
- a mass content of thinners greater than or equal to 0.1% and less than or equal to 1%, and
- a mass content of catalyst less than 7% and greater than or equal to 3%,
the gluing of the friction lining in the cross-linked state to said face of the backing disc being able to withstand a centrifugal force corresponding to rotation at 15,000 rpm at a temperature of 200°C.

2. Friction disc according to Claim 1, wherein the gluing of the friction lining to said face of the backing disc is able to withstand a centrifugal force corresponding to rotation at 15,000 rpm at a temperature of 200°C after having undergone a heat treatment at a temperature greater than or equal to 350°C and less than or equal to 400°C.

3. Friction disc according to one of Claims 1 or 2, exhibiting, after the friction material has been peeled away, peeled continuous fibres and/or peeled material of a thickness from 200 µm to 1 mm; the surface area of these regions of peeled off material representing 40% to 100% of the surface area of the backing disc, the peeling involving bending the friction disc by between 15° and 90° in order to break the bond between the friction lining (14) and the backing disc (12) and removing the entire unstuck friction lining (14).

4. Friction disc according to any one of the preceding claims, wherein, after peeling, each ruptured-adhesion region has a surface area of a size less than 1 cm², the peeling involving bending the friction disc by between 15° and 90° in order to break the bond between the friction lining (14) and the backing disc (12) and removing the entire unstuck friction lining (14).

5. Method for attaching a friction lining to a surface of a backing disc by gluing, wherein
- solvent-free powdered glue based on solid phenolic resin is applied to at least one of either the surface of the backing disc and a surface of the friction lining in the cross-linked state,
- the glue is spread over this surface by heating to a temperature lower than the cross-linking temperature of the resin,
- the friction lining in the cross-linked state is brought into contact with the backing disc via said glue-coated surface,
- the whole is heated to a temperature greater than or equal to 150°C and less than or equal to 190°C for a duration greater than or equal to 5 min and less than or equal to 2h at a pressure greater than or equal to 50 bar and less than or equal to 150 bar,
- the whole is heated to a temperature greater than or equal to 200°C and less than or equal to 260°C for a duration greater than or equal to 1h and less than or equal to 15h at atmospheric pressure.

6. Method according to Claim 5, wherein the powdered glue is spread over the surface of the backing disc or over the surface of the friction lining in the cross-linked state at a surface coverage less than or equal to 13 mg/cm².

7. Method according to one of Claims 5 to 6, wherein the powdered glue contains a mass content of catalyst less than 7% and greater than or equal to 3%.

8. Method according to one of Claims 5 to 7, wherein the solvent-free powdered glue has a flow greater than or equal to 50 mm.

9. Method according to one of Claims 5 to 8, wherein a step of machining the friction lining is provided prior to the placement of this lining on the glue-coated surface of the backing disc.
